# EUROPEAN PATENT APPLICATION

(11) **EP 3 078 346 A1**
(43) Date of publication of application: **12.10.2016**
(21) Application number: 15184285.3
(22) Date of filing: 08.09.2015
(51) Int. Cl.: A61C 3/10, A61C 7/04, A61C 7/14, A61C 13/225, A61C 13/12

(54) **DEVICE FOR TRANSFERRING DENTAL PROSTHESIS**

(30) Priority: 08.04.2015 KR 20150049432
(71) Applicant: Samwoo Co., Ltd., Ulsan 44786 (KR)
(72) Inventor: Kim, Baek Jin, Seoul 06004 (KR)
(74) Representative: Michalski Hüttermann & Partner Patentanwälte mbB

(57) **Abstract**

The present disclosure relates to a device for transferring dental prosthesis. The device includes: a main body having defined therein an elongated inner space opened toward the front; a separation tip coupled to a front end of the main body and having a first through-passage fluidically communicating with the inner space of the main body; a pressure sensitive adhesive means attached to a front end of the separation tip and having a second through-passage fluidically communicating with the first through-passage of the separation tip; a wire disposed within the inner space of the main body and the through-passages; a finger guide mounted on the outer circumference of the main body and configured to forwards and rearwards move the front end of the wire through the manipulation thereof at the outside of the main body; and a separation means configured to separate the separation tip from the main body.

## Description

### TECHNICAL FIELD

The present disclosure relates to a device for transferring dental prosthesis, and more particularly, to such a device which enables a dental prosthesis attached to a pressure sensitive adhesive means thereof to be set in teeth and then can easily detach the dental prosthesis from the pressure sensitive adhesive means.

### BACKGROUND OF THE INVENTION

A dental prosthesis used for the restorative treatment in a dental clinic has a small size and is not formed in a constant shape. For this reason, there is a risk that a premanufactured dental prosthesis may be dropped on the floor of the dental clinic during the transfer of the dental prosthesis to be set to teeth of a patient, and it is not easy to set the dental prosthesis in a correct position of the teeth.

Conventionally, a rod-shaped mechanism having a pressure sensitive adhesive applied to an end thereof is used in order to facilitate the transfer of the dental prosthesis. Because the pressure sensitive adhesive itself has an adhesive strength, the dental prosthesis can be attached to the rod-shaped instrument irrespective of the shape of the rod-shaped instrument. However, the conventional rod-shaped mechanism also entails a problem in that it is difficult to set the dental prosthesis in the patient's teeth and then remove the rod-shaped instrument from the set dental prosthesis. In addition, because the rod-shaped instrument is a disposable product which is not recyclable, it is disadvantageous in an environmental aspect.

In order to solve this problem, Korean Patent Laid-Open Publication No. 10-2014-0090917 entitled "Air-Free Placer" has proposed a method of using a suction force of a suction machine included in a dental treatment chair. In other words, when an air suction passage of a transfer instrument connected to the suction machine is opened and air is sucked into the transfer instrument through the air suction passage, an air suction force acts in a suction port to cause a dental prosthesis to be fixedly brought into close contact with the suction port whereas when the air suction passage is closed and air is not sucked into the transfer instrument through the air suction passage, the suction force does not act in the suction port to cause the dental prosthesis to be detached from the suction port of the transfer instrument.

Such a conventional technology employing the suction machine has an advantage in that the dental prosthesis can be easily fixed to and detached from the suction port through only the opening and closing operation of the suction passage of the transfer instrument, and the transfer instrument can be re-used several times after disinfection. However, the conventional technology entails a problem in that if a through-hole of the suction port become narrow due to attachment of the dental prosthesis to the suction port, a high-pitched noise may be generated by air sucked into the suction port through the through-hole and the suction machine cannot perform a suction function during the connection of the transfer instrument to the suction machine.

### SUMMARY OF THE INVENTION

Accordingly, the present invention has been made to solve the aforementioned problems occurring in the prior art, and it is an object of the present invention to provide a device for transferring a dental prosthesis, which enables the dental prosthesis to be easily fixed thereto and detached therefrom even without a separate advanced medical equipment such as a suction machine, and is re-usable several times so that it is advantageous in an environmental aspect.

To achieve the above object, according to an embodiment of the present disclosure, there is provided a device for transferring a dental prosthesis, including:
a rod-shaped main body having defined therein an elongated inner space opened toward the front;
a separation tip coupled to a front end of the main body and having a first through-passage fluidically communicating with the inner space of the main body;
a pressure sensitive adhesive means attached to a front end of the separation tip and having a second through-passage fluidically communicating with the first through-passage of the separation tip;
a wire longitudinally disposed within the inner space of the main body and the first and second through-passages;
a finger guide mounted on the outer circumference of the main body and configured to forwards and rearwards move the front end of the wire through the manipulation thereof at the outside of the main body; and
a separation means configured to separate the separation tip from the main body.

According another embodiment of the present disclosure, a rear end of the wire may be formed as a spring.

According still another embodiment of the present disclosure, the separation means may include: a push rod disposed in the inner space of the main body so as to avoid a positional interference between the push rod and the wire, and a separation button configured to forwards and rearwards move the push rod through the manipulation thereof at the outside of the main body, whereby when the separation button is pushingly pressed, the push rod positioned within the main body is moved forwards to push the rear end of the separation tip so that the separation tip is separated from the main body.

According yet another embodiment of the present disclosure, the main body may include a first retaining step formed on the inner circumferential surface of the front end thereof, and the separation tip may include a pair of retaining elements each having a second retaining step whose rear surface is formed as a sloping face so that when the push rod is moved forwards by pressing the separation button, the front end thereof slidingly pushes the sloping face of the separation tip.

According a further embodiment of the present disclosure, a return spring may be disposed within the main body to rearwards push the push rod.

According a still further embodiment of the present disclosure, the front end of the main body may be formed in a bent shape.

### Effects of the Invention

According to the device for transferring a dental prosthesis of the present disclosure, the dental prosthesis attached to a pressure sensitive adhesive means of the device is set in teeth and then can be easily detached from the pressure sensitive adhesive means of the device.

In addition, because only a part of the device such as the pressure sensitive adhesive means which is difficult to re-use after one-time use of the pressure sensitive adhesive means is removed from the device and then a new one is coupled to the device when in use, the inventive device is environmentally-friendly and economically efficient..

In addition, detachment of the pressure sensitive adhesive means from the device can be easily performed by the separation means.

### BRIEF DESCRIPTION OF THE DRAWINGS

FIG. 1 is an exploded perspective view of a device for transferring a dental prosthesis according to an embodiment of the present disclosure;
FIG. 2 shows an assembled perspective view and a cross-sectional view of the dental prosthesis transfer device according to an embodiment of the present disclosure;
FIG. 3 is a cross-sectional view showing a method of detaching a dental prosthesis from a pressure sensitive adhesive means of the dental prosthesis transfer device according to an embodiment of the present disclosure;
FIG. 4 is a cross-sectional view showing a method of separating a separation tip from a main body of the dental prosthesis transfer device according to an embodiment of the present disclosure; and
FIG. 5 is a cross-sectional view showing a rail and a rail groove of the dental prosthesis transfer device according to an embodiment of the present disclosure.

### * Explanation on reference numerals of main elements in the drawings *

1: dental prosthesis transfer device
10: main body
11a: first retaining step
11b: incised window
20: separation tip:
21: retaining element
21a: second retaining step
30: pressure sensitive adhesive means
40: wire
41: spring
50: finger guide
61: push rod
62: separation button
70: return spring
G: sloping face
H1: first through-passage
H2: second through-passage
S: inner space

### DETAILED DESCRIPTION OF THE INVENTION

Reference will now be made in detail to embodiments of the present disclosure, examples of which are illustrated in the accompanying drawings. While the present disclosure will be described in conjunction with the following embodiments, it will be understood that they are not intended to limit the present disclosure to these embodiments alone. On the contrary, the present disclosure is intended to cover alternatives, modifications, and equivalents which may be included within the spirit and scope of the present disclosure as defined by the appended claims. Furthermore, in the following detailed description of the present disclosure, numerous specific details are set forth in order to provide a thorough understanding of the present disclosure. However, embodiments of the present disclosure may be practiced without these specific details.

The present disclosure is directed to a device for fixedly attaching a dental prosthesis having an atypical shape to a pressure sensitive adhesive means and transferring the dental prosthesis. A conventional dental prosthesis transfer device using a pressure sensitive adhesive entails a problem in that it is not easy to set a dental prosthesis attached to a pressure sensitive adhesive in a patient's teeth and detach the dental prosthesis from the pressure sensitive adhesive and is disposable. On the other hand, the dental prosthesis transfer device according to the present disclosure has the characteristics in that a dental prosthesis attached to a pressure sensitive adhesive means is set in a patient's teeth and then is easily detached from the pressure sensitive adhesive means, and can be re-used several times.

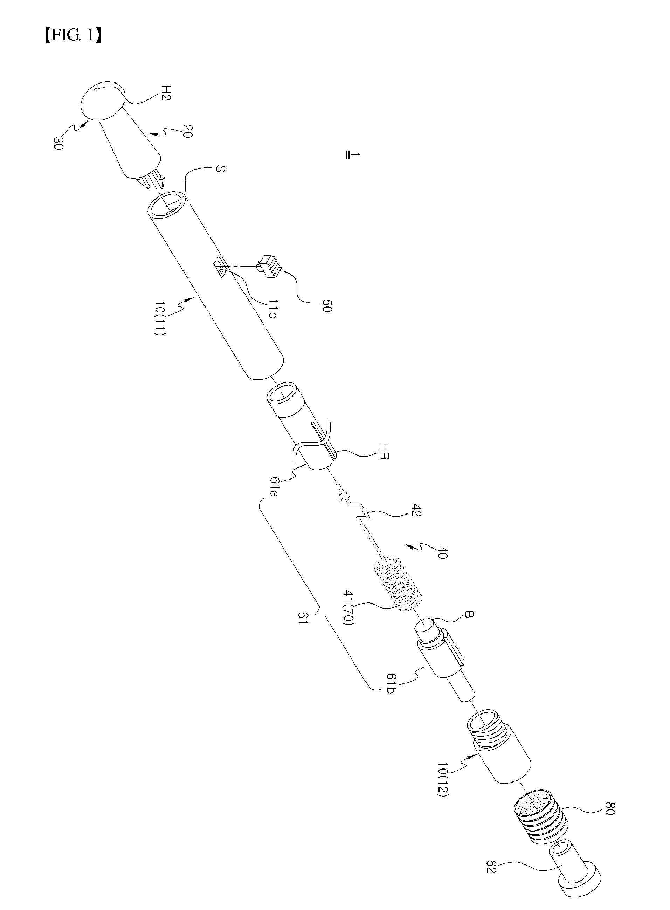

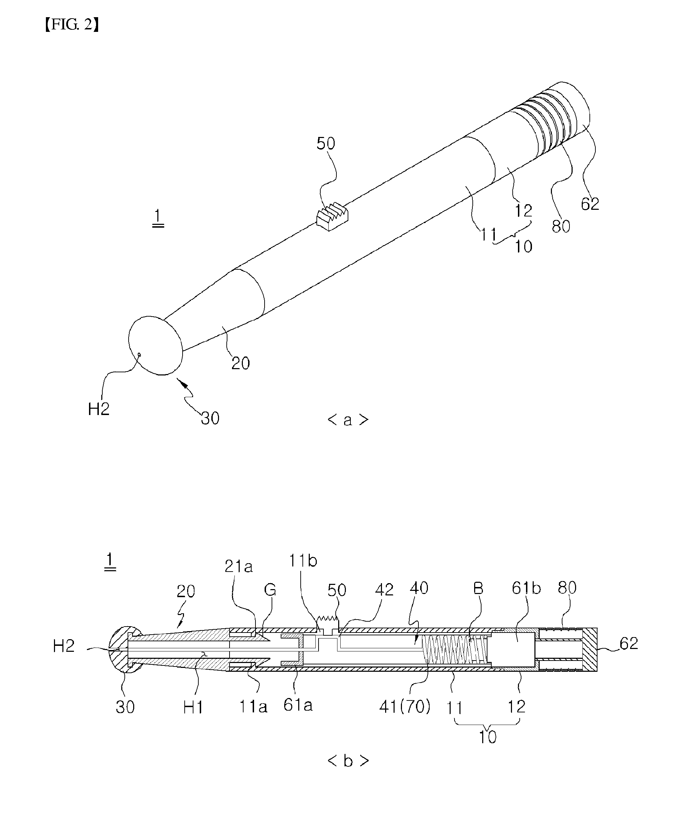

FIG. 1 is an exploded perspective view of a device 1 for transferring a dental prosthesis according to an embodiment of the present disclosure, and FIG. 2 shows an assembled perspective view and a cross-sectional view of the dental prosthesis transfer device according to an embodiment of the present disclosure.

The dental prosthesis transfer device 1 according to the present disclosure includes a rod-shaped main body 10, a separation tip 20 coupled to a front end of the main body 10, a pressure sensitive adhesive means 30 attached to a front end of the separation tip 20, a wire 40 positioned within the main body 10, a finger guide 50 configured to forwards and rearwards move the front end of the wire 40, and a separation means configured to separate the separation tip 20 from the main body 10.

For reference, in the description of the dental prosthesis transfer device of the present disclosure, the word 'front' of the terms 'forwards', 'front end' and the like as used herein refers to a direction in which the dental prosthesis is detached in the dental prosthesis transfer device 1, and the word 'rear' of the terms 'rearwards', 'rear end' and the like as used herein refers to a direction in which the dental prosthesis is attached in the dental prosthesis transfer device 1.

The main body 10 constitutes the entire outer appearance of the dental prosthesis transfer device 1 formed in an elongated rod shape so that other constituent elements can be coupled to the main body 10 or can be disposed at the inner space of the main body 10.

In FIG. 1, there is shown an example in which the section of the main body 10 is formed in a circular shape, but may be formed in a polygonal shape such as a square shape, a hexagonal shape, etc., as long as it does not adversely affect an intrinsic function thereof. In addition, the main body 10 may be embodied as an integrated single member, but may be composed of a plurality of members such as a tubular member 11 and a stopper member 12 as shown in FIG. 1 so that the main body can be easily coupled with other members.

The inner space S of the main body 10 is opened toward the front so as to fluidically communicate with a first through-passage H1 formed in the separation tip 20 and a second through-passage H2 formed in the pressure sensitive adhesive means 30. Thus, the wire 40 is formed in an elongated linear shape. A front end of the wire 40 can reach up to the outside of the pressure sensitive adhesive means 30 constituting a frontmost end of the dental prosthesis transfer device 1 after passing through the inner space S of the main body 10 and the first and second through-passages H1 and H2 of the separation tip 20 and the pressure sensitive adhesive means 30.

A dental prosthesis is attached to the pressure sensitive adhesive means 30 positioned at the frontmost end of the dental prosthesis transfer device 1 when in use of the dental prosthesis transfer device. Thus, preferably, the pressure sensitive adhesive means uses a silicon-based or acryl-based pressure sensitive adhesive and a material capable of forming second through-passage H2 at the sectional center thereof is selected.

The separation tip 20 may have a protruding step 22 formed on the outer circumferential surface thereof so that the pressure sensitive adhesive means 30 can be firmly attached to the front end of the separation tip 20.

The finger guide 50 is mounted on the outer circumference of the main body 10 and serves to facilitate the forward and rearward movement of the front end of the wire 40 which is positioned within the dental prosthesis transfer device and is difficult to access. Preferably, the main body 10 is partially incised at the outer circumferential surface thereof to form an incised window 11b to interconnect the finger guide 50 and the wire 40 so that the movement of the external finger guide 50 can be delivered to the internal wire 40 through the incised window 11b.

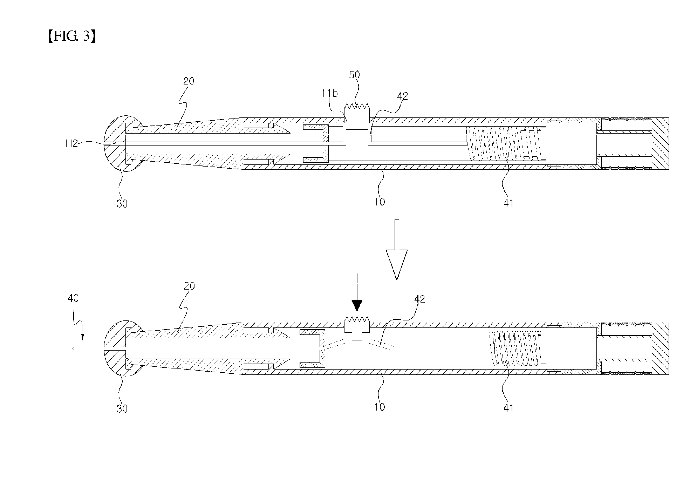

In FIG. 3, there are shown a detailed shape of the wire 40 and an interaction between the wire 40 and the finger guide 50.

As shown in FIG. 3, the wire 40 has a bent portion 42 formed at a contact part between the wire 40 and the finger guide 50 so that when the finger guide 50 is pressed toward the inside of the main body 10, the bent portion 40 is stretched horizontally to cause a front end of the wire 40 to be forcibly moved to the front.

Alternatively, although not shown, the wire 40 may be formed in the shape of a straight line so that the wire 40 can be moved forwards and rearwards by the forward and rearward movement of the finger guide 50. In this case, the main body 10 is required to have an elongated incised window 11b longitudinally formed on the outer circumferential surface thereof in a forward and rearward direction of the main body 10 in which the finger guide 50 is moved.

When a dental prosthesis is transferred to a desired teeth position in an oral cavity using the dental prosthesis transfer device 1 of the present disclosure, the dental prosthesis can be firmly attached to the pressure sensitive adhesive means 30 so that the wire 40 is not exposed to the outside of the pressure sensitive adhesive means 30 as shown in an upper figure of FIG. 3. After the completion of the setting of the dental prosthesis in the teeth, the finger guide 50 is pressed to cause the wire 40 to be protruded to the outside of the pressure sensitive adhesive means 30 so that the dental prosthesis pressed pushingly by the wire 40 can be easily detached from the pressure sensitive adhesive means 30.

A rear end of the wire 40 can be formed as a spring 41 as shown in FIG. 3.

The spring 41 has elasticity that allows the spring to return to its original shape when a load applied to the spring is removed. Thus, the wire 40 deformed during the movement of the finger guide 50 can return to its original shape even without a separate manipulation of the wire.

As described above, the dental prosthesis transfer device 1 according to the present disclosure includes the separation means so that if the pressure sensitive adhesive means 30 is deformed or is degraded in adhesive strength after one-time use thereof, it can be removed from the device together with the separation tip 20. In addition, a new separation tip 20 (including a pressure sensitive adhesive means) can be coupled to the front end of the main body 10 when in use of the device. As such, among constituent elements of the dental prosthesis transfer device, only a part which is difficult to recycle can be replaced with a new one and the remaining elements can be re-used several times after disinfection, and thus the inventive device is environmentally-friendly and economically efficient.

The main body 10, the finger guide 50, and the separation means are preferably formed of a material having durability and allowing for autoclave disinfection. The wire 40 is preferably made of stainless steel or special steel which is plated to prevent rust.

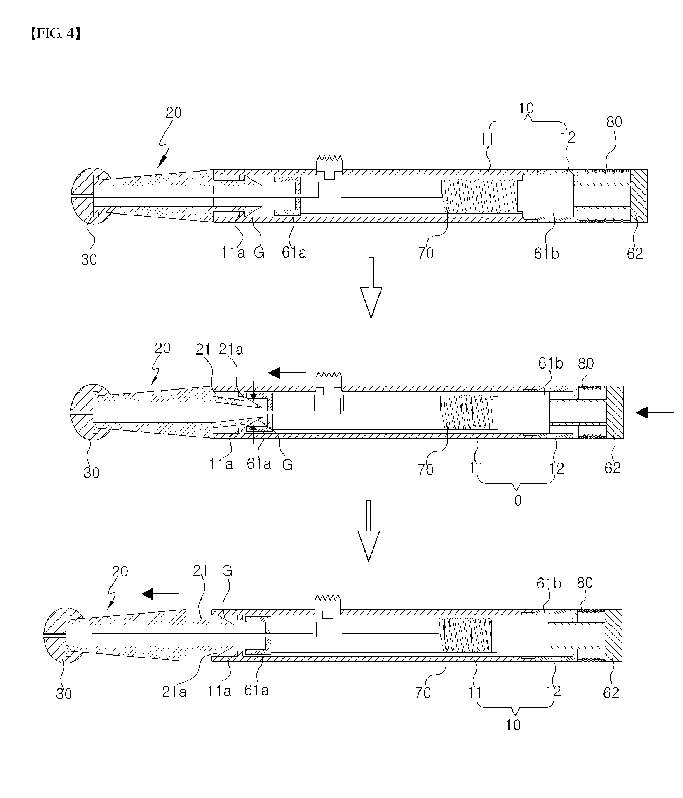

In FIG. 4, there is shown a cross-sectional view of a detailed embodiment of the operation of the separation means.

In this embodiment, the separation means includes a push rod 61 disposed in the inner space S of the main body 10 so as to avoid a positional interference between the push rod 61 and the wire 40, and a separation button 62 configured to forwards and rearwards move the push rod 61 through the manipulation thereof at the outside of the main body 10. Thus, when the separation button 62 is pushingly pressed, the front end of the push rod 61 positioned within the main body 10 is moved forwards to push the rear end of the separation tip 20 so that the separation tip 20 is separated from the main body 10.

As such, only one-time pressing operation of the separation button 62 can separate the separation tip 20 from the main body 10, and thus the replacement of the separation tip 20 can be very easily performed.

The separation button 62 can be positioned at the rear of the main body 10 as shown in FIG. 4., but may be positioned on the outer circumferential surface of the main body 10 such as the finger guide 50. In the case where the separation button 62 is disposed at the rear of the main body 10, a cover ring 80 made of an elastic material may be disposed between the main body 10 and the separation button 62 to enable the folding of a boundary portion between the main body 10 and the separation button 62 for the sake of the improvement of the outer appearance of the dental prosthesis transfer device.

The main body 10 includes a first retaining step 11a formed on the inner circumferential surface of the front end thereof, and the separation tip 20 includes a pair of retaining elements each having a second retaining step 21a. The rear surface of the second retaining step 21a is formed as a sloping face G.

As shown in a second figure of FIG. 4, when the push rod 61 is moved forwards by pressing the separation button 62, the front end thereof slidingly pushes the sloping faces G of the second retaining steps 21a the separation tip 20 and simultaneously the rear ends of the pair of protruding elements 21 with the first through-passage H1 interposed therebetween approach closer to each other. As a result, the engagement between the second retaining steps 21a and the first retaining step 11a is released so that the separation tip 20 can be separated from the main body 10.

As such, the sloping face G of the second retaining step 21a facilitates the disengagement of the separation tip 20 from the main body 10 as well as the engagement of a new separation tip 20 to the main body 10.

A return spring 70 may be disposed within the main body 10 to rearwards push the push rod 61.

The return spring 70 serves to allow the push rod 61 moved forwards by its elastic force to return to its original position.

The return spring 70 may be formed as a separate member performing an independent function, but the spring 41 of the wire 40 may also function as the return spring 70 as show in FIG. 4. In FIG. 4, the push rod 61 consists of a front push rod 61a and a rear push rod 61b. The return spring 70 is fitted around a fixed protrusion B of the rear push rod 61b and pushes the rear push rod 61b rearwards. The front push rod 61a is formed in a cylindrical shape which is internally hollow so that it is engaged with the rear push rod 61b while surrounding the return spring 70.

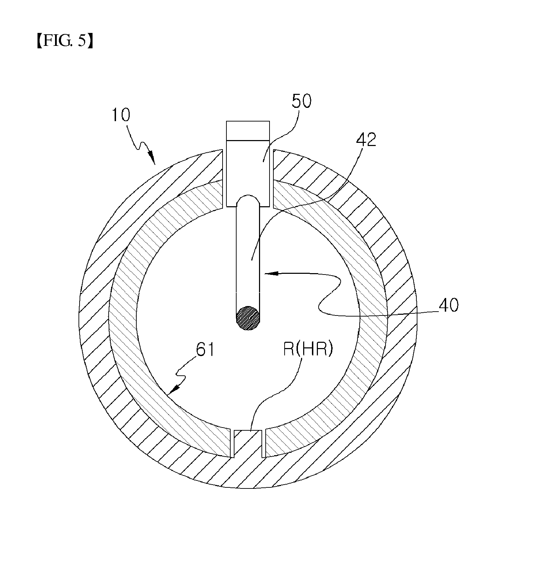

As show in FIG. 5, the push rod 61 may have a rail groove HR longitudinally formed thereon, and the main body 10 may have a rail R formed on the inner circumferential surface thereof so as to be engaged with the rail groove HR.

The rail groove HR is a vacant space, and the bent portion 42 of the wire 40 may be positioned in the rail groove HR so that the wire 40 can be engaged with the finger guide 50 without any positional interference between the wire 40 and the push rod 61. In addition, the rail R serves to guide the push rod 61 to be inserted into the main body 10 in a direction in which the positions of the rail groove HR and the bent portion 42 are identical to each other.

The front end of the main body 10 can be formed in a shape bent at a predetermined angle.

If the front end of the main body 10 is bent at about 45°, the dental prosthesis can be set in a desired teeth position in an accurate and easy manner in a state in which the dental prosthesis transfer device 1 is comfortably gripped by a user.

If the main body 10 is formed in a bent shape, the wire 40 disposed within the main body 10 and the separation means are required to be bent to fit the bent shape of the main body 10. Similarly, the wire 40 and the separation means preferably have elasticity so as to be easily moved in the inner space S of the main body 10.

While the present invention has been described in connection with the specific embodiments illustrated in the drawings, they are merely illustrative, and the invention is not limited to these embodiments. It is to be understood that various equivalent modifications and variations of the embodiments can be made by a person having an ordinary skill in the art without departing from the spirit and scope of the present invention. Therefore, the true technical scope of the present invention should not be defined by the above-mentioned embodiments but should be defined by the appended claims and equivalents thereof.

## Claims

1. A device for transferring a dental prosthesis, comprising:
a rod-shaped main body 10 having defined therein an elongated inner space S opened toward the front;
a separation tip 20 coupled to a front end of the main body 10 and having a first through-passage H1 fluidically communicating with the inner space S of the main body 10;
a pressure sensitive adhesive means 30 attached to a front end of the separation tip 20 and having a second through-passage H2 fluidically communicating with the first through-passage H1 of the separation tip 20;
a wire 40 longitudinally disposed within the inner space S of the main body 10 and the first and second through-passages H1 and H2;
a finger guide 50 mounted on the outer circumference of the main body and configured to forwards and rearwards move the front end of the wire 40 through the manipulation thereof at the outside of the main body 10; and
a separation means configured to separate the separation tip 20 from the main body 10.

2. The device as claimed in claim 1, wherein a rear end of the wire 40 is formed as a spring 41.

3. The device as claimed in claim 1, wherein the separation means comprises: a push rod 61 disposed in the inner space S of the main body 10 so as to avoid a positional interference between the push rod 61 and the wire 40, and a separation button 62 configured to forwards and rearwards move the push rod 61 through the manipulation thereof at the outside of the main body 10, whereby when the separation button 62 is pushingly pressed, the push rod 61 positioned within the main body 10 is moved forwards to push the rear end of the separation tip 20 so that the separation tip 20 is separated from the main body 10.

4. The device as claimed in claim 3, wherein the main body 10 comprises a first retaining step 11 a formed on the inner circumferential surface of the front end thereof, and the separation tip 20 includes a pair of retaining elements each having a second retaining step 21a whose rear surface is formed as a sloping face G so that when the push rod 61 is moved forwards by pressing the separation button 62, the front end thereof slidingly pushes the sloping face G of the separation tip 20.

5. The device as claimed in claim 3, wherein a return spring 70 is disposed within the main body 10 to rearwards push the push rod 61.

6. The device as claimed in claim 1, wherein the front end of the main body 10 is formed in a bent shape.
